# EUROPEAN PATENT SPECIFICATION

(11) **EP 1 972 489 B1**
(45) Date of publication and mention of the grant of the patent: **04.05.2011**
(21) Application number: 07425163.8
(22) Date of filing: 21.03.2007
(51) Int. Cl.: B60N 2/30

(54) **Second-row seat with backrest that can be knocked down for a motor vehicle**
Zweitreihensitz mit umlegbarer Rückenlehne für ein Kraftfahrzeug
Siège arrière avec dossier qui peut être rabattu pour véhicule à moteur

(43) Date of publication of application: 24.09.2008
(73) Proprietor: C.R.F. Società Consortile per Azioni, 10043 Orbassano (Torino) (IT)
(72) Inventor: Demontis, Salvatore, 10043 Orbassano (IT)
(74) Representative: Bergadano, Mirko

(56) References cited:
- EP-A- 1 193 112
- EP-A1- 1 488 951
- WO-A-2005/095148
- DE-C1- 4 315 479
- DE-C1- 10 207 179
- DE-U1- 20 304 713
- US-A1- 2005 236 879

## Description

The present invention relates to a second-row seat with backrest that can be knocked down for a motor vehicle.

In motor vehicles having a second row of seats behind that of the driver, there is felt the need to be able to knock down the backrest of said seats with respect to the sitting surface in order to create a resting surface for the luggage, in general contiguous to that of the usual rear luggage compartment.

Different types of seats are known with backrests that can be knocked down with respect to the sitting surface. In a known type, the sitting surface is fixed and the backrest is simply hinged with respect to the sitting surface. This type of device presents the drawback that the conformation of the sitting surface limits knocking-down of the backrest. This backrest, since it remains inclined, is not able to form an efficient resting surface for the luggage, and in general creates a reduced useful space for the luggage itself.

Other types of seats have been proposed with backrests that can be knocked down, in which also the sitting surface can be displaced so as to enable the backrest to set its rear wall in a substantially horizontal position. In one of these types of seats, the sitting surface can be tipped up forwards about its front edge so as to set itself vertically against the front seat, to enable the backrest to occupy the space of the sitting surface. This seat presents the drawback of requiring preliminarily a displacement forwards of the sitting surface to enable it to be tipped up forwards, so that different manoeuvres are required to obtain knocking-down of the backrest.

There has also been proposed a second-row seat in which the sitting surface is connected at the front to a fixed base via a pair of levers that are turned so as to lower the front part of the sitting surface itself, before knocking down the corresponding backrest. The rear part of the sitting surface is in turn connected to the backrest by means of a complicated mechanism that comprises a pair of plates connected to the base by means of an articulated quadrilateral. Pivoted on each plate is another lever with three pins, which has, in addition to the fulcrum on the plate, a first mobile pin, on which the rear part of the sitting surface is pivoted, and a second mobile pin connected to the backrest by means of a connecting rod-crank pair. The crank is in turn pivoted on the corresponding plate.

This known seat presents the drawback of having a complicated mechanism, requiring a large number of articulated joints. Furthermore, to knock down the backrest, it is necessary to raise first the backrest, together with the two plates, displacing the sitting surface forwards, to knock down then the backrest, which with the connecting rods rotates the three-pin lever for displacing the sitting surface backwards, and finally to lower the plates by means of the corresponding articulated quadrilaterals. To bring the backrest back up, it is necessary to go through the sequence of three operations described above in reverse order.

There are known several other second-row seats for a motor vehicle, each provided with a backrest pivoted on stationary hinge to be knocked-down. The sitting surface is normally connected to the base and to the backrest by articulated elements to be displaced downwards and forwards or rearwards when the backrest is knocked-down.

In the document EP 1 193 112 A, which discloses a seat with the features of the preamble of claim 1, the sitting surface is provided with a shaped plate. The articulated elements connecting the sitting surface to the base include a pair of levers having each a movable hinge set at the front edge of the plate.

In the document DE 203 04 713 U, the sitting surface is also connected to the base and to the backrest by articulated elements pivoted on a stationary support, this latter being provided with end stroke stops for the sitting surface.

In the document DE 102 07 179 C, the sitting surface includes an intricate rigid structure including a pair of lateral bars connected at least by a transverse plate. The articulated elements are adapted to displace the sitting surface forwards when the backrest is knocked-down.

In the document WO 2005/095148 A, the sitting surface is carried by a rigid frame including a plate and zig-zag springs. The frame is connected to the base by articulated elements associated to a mechanism manually operable to rise and fall the sitting surface.

In the document EP 1 488 951 A, the sitting surface is also carried by a frame including a rigid plate and zig-zag springs. The sitting surface is connected to the base by articulated elements, which when the backrest is knocked-down displace the sitting surface forwards.

Finally, in the document US 2005/236879 A, a second-row seat is disclosed, where the sitting surface only is foldable. The cushion supported by a rigid structure, which is connected to the base by a pair of levers adapted to displace the sitting surface from the horizontal position to a vertical position. The structure includes a plate provided with several apertures not affected by the levers.

The aim of the invention is to provide a second-row seat with backrest that can be knocked down for motor vehicles, which will be simple to use and economically advantageous to produce and that will enable the backrest to be knocked down with a single movement.

According to the invention, the above aim is achieved by a second-row seat with backrest that can be knocked down, as defined in Claim 1.

For a better understanding of the invention, described herein is a preferred embodiment thereof, provided purely by way of example with the aid of the annexed drawings, in which:
Figure 1 is a side view of a second-row seat with backrest that can be knocked down according to the invention;
Figure 2 is a detail of Figure 1 at an enlarged scale;
Figure 3 is a side view of the seat of Figure 1, in a second operative position;
Figure 4 is a perspective view of the rigid structure of the seat of Figure 1; and
Figure 5 is a diagram of the mechanism for connection of the sitting surface with the backrest of the seat.

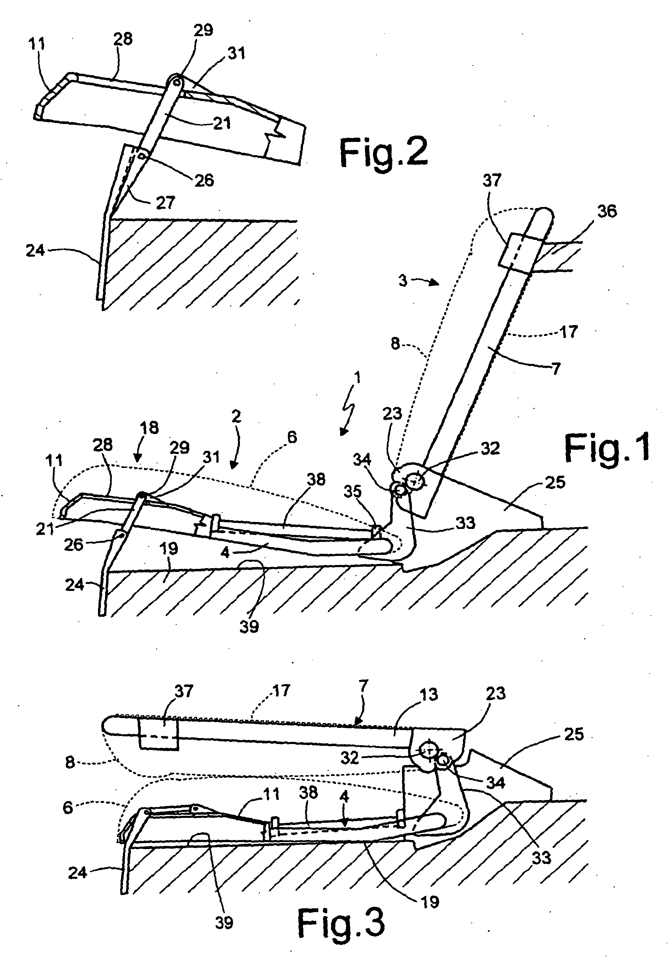

With reference to Figure 1, designated as a whole by 1 is a second-row seat of a motor vehicle, in particular a car. The seat 1 comprises a sitting surface 2 and a backrest 3. In the ensuing description, by the term "sitting surface" is meant the substantially horizontal part of the seat, formed by a rigid support or frame 4, set on which is a stuffed cushion 6, whilst by the term "backrest" is meant the part of the seat, normally in a sub-vertical position, which comprises another rigid support, or frame 7 and a corresponding stuffed cushion 8. The cushions 6 and 8 are indicated by dashed lines in Figures 1 and 3.

Hereinafter the terms "front", "rear" and "longitudinal" refer to the direction in which the motor vehicle is travelling. In cars, the second-row seat is in general also the rear seat. In other types of motor vehicles, the second-row seat can be either a rear one or any intermediate seat between that of the driver and the rear seat. In any case, the second-row seat can be single for two or three passengers or else divided into two or three segments. In the annexed drawings, a rear seat 1 is represented for just one passenger.

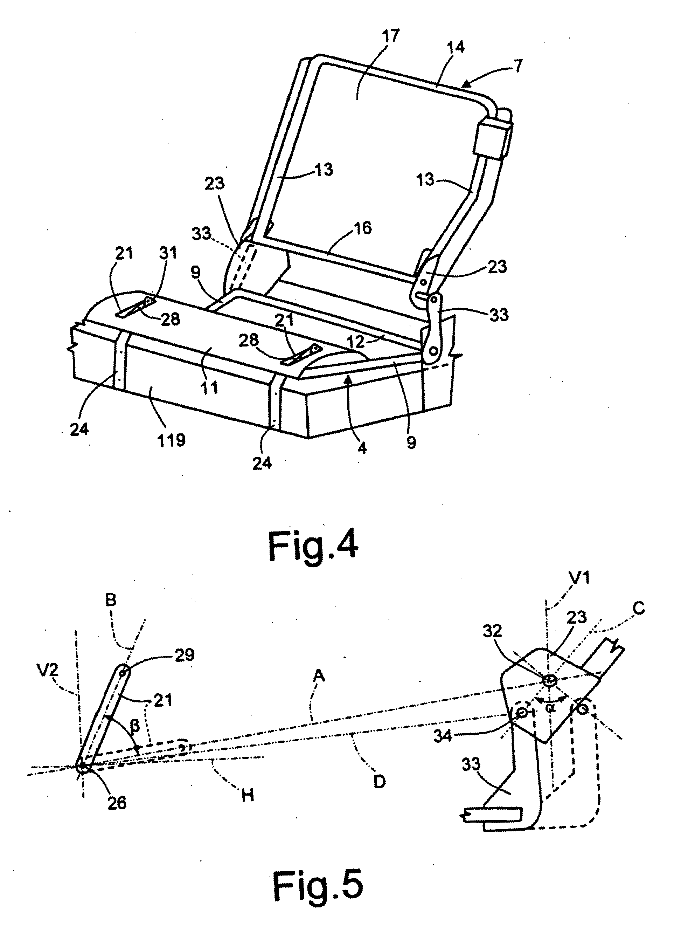

The frame 4 of the sitting surface 2 comprises two side bars 9 (Figure 4), connected at the front by a shaped metal plate 11 and at the rear by a cross member 12. Advantageously, the side bars 9 and the cross member 12 can be formed by a single tubular sectional element bent to form a U. In turn, the frame 7 of the backrest 3 is constituted by two uprights 13, connected by two cross members 14 and 16, on which a substantially plane plate 17 is fixed. Also the uprights 13 and the cross member 14 can be formed by a single tubular sectional element appropriately bent. The plate 17 can be advantageously coated at the rear with a material suitable for loading and unloading luggage so that it constitutes the resting surface for the luggage.

The sitting surface 2 of the seat 1 has a front portion 18 (Figure 1), connected to a fixed base or floor panel 19, via a first articulated element 21, and a rear portion 22 connected to the floor panel 19 via articulated means, comprising a second articulated element 23, which is designed to displace the sitting surface 2 in concomitance with knocking-down of the backrest 3. In particular, fixed on the floor panel 19 are two front brackets 24 (see also Figure 4), each carrying a corresponding first articulated element 21. Furthermore, fixed on the floor panel 19 are two rear brackets 25, in the form of substantially triangular plates, set at the two sides of the seat 1 and each carrying a corresponding second articulated element 23.

According to the invention, the first articulated element is constituted by a lever 21 (see also Figure 2) having a fixed hinge 26, formed by a pin carried by a longitudinal appendage, or tab 27 of the corresponding front bracket 24. In a position corresponding to each lever 21, the shaped plate 11 presents an opening or slot 28, extending longitudinally, which is designed to enable a certain rotation of the lever 21, as will be seen hereinafter.

Each lever 21 is moreover equipped with a mobile hinge 29, formed by another pin carried by an appendage 31 of the plate 11, which is set in a position corresponding to the rear end of the slot 28 and projects upwards from the plate 11. In particular, the slot 28 is designed to house the corresponding lever 21 and the fixed hinge 26 when the lever 21 turns in the clockwise direction. In turn, the bracket 24 is set in such a way as to arrest, with its front edge, the displacement backwards of the slot 28 so that the rotation of the lever 21 stops in the position indicated in Figure 3.

The second articulated element of the seat 1 is formed by a bracket 23, rigidly fixed on the corresponding upright 13 of the frame 7 of the backrest 3. Each bracket 23 has a fixed hinge 32, formed by a pin carried by the corresponding rear bracket 25. Rigidly fixed on the rear cross member 12 of the frame 4 of the sitting surface 2 are two brackets 33 of interconnection between the sitting surface 2 and the backrest 3. Each bracket 33 is in turn connected by an articulated joint to the corresponding bracket 23 by means of a mobile hinge 34, formed by another pin and set in a position lower than the hinge 32.

The distance between the fixed hinge 26 (Figure 5) of the lever 21 and the corresponding mobile hinge 29 is greater than the distance between the fixed hinge 32 of the bracket 23 and the corresponding mobile hinge 34. Advantageously, the distance between the hinges 26 and 29 of the lever 21 can be comprised between two and three times that between the hinges 32 and 34 of the bracket 23.

The two mobile hinges 29 and 34 are set on opposite sides with respect to a line A joining the fixed hinges 26 and 32. Normally, with the backrest 3 in an upright position, the line B joining the two hinges 26 and 29 of each lever 21 and the line C joining the two hinges 32 and 34 of each bracket 23 are substantially parallel to one another and are oriented in directions close to the vertical, as illustrated in Figure 5. The position of the hinges and the length of the levers depend basically upon the paths that it is desired to obtain.

The upright position of the backrest 3 is defined by the arrest of the corresponding frame 7 against a fixed shoulder 36 of the passenger compartment of the motor vehicle, indicated only schematically in Figure 1, on which the backrest 3 can be blocked by means of a lock 37, in itself known. Finally, the seat 1 is equipped with a gas spring 38, in itself known, which is set between a shoulder 35 of the floor panel 19 and the plate 11 of the frame 4. The gas spring 38 has the purpose of damping the movement downwards of the sitting surface 2 when the backrest 3 is knocked down, and of reducing the stress to bring back the seat 1 with the backrest 3 into an upright position.

To knock down the backrest 3 on the sitting surface 2 of the seat 1, after having released the lock 37, it is sufficient to rotate the backrest 3 in the counter-clockwise direction in Figure 1, about the fixed hinges 32 of the two brackets 23, towards the position of Figure 3. The mobile hinges 34 of the brackets 23 then displace backwards, drawing along the interconnection brackets 33 together with the sitting surface 2.

In turn, the frame 4 of the sitting surface 2 rotates the two levers 21 in the clockwise direction about the corresponding fixed hinges 26 until the shaped plate 11 stops against the edge of the fixed front brackets 24, as indicated in Figure 3. With said movement, the mobile hinges 34 of the brackets 23 displace along an arc α (see also Figure 5) smaller than 90° and substantially symmetrical with respect to a vertical line V1 passing through the corresponding fixed hinge 32. Consequently, after the displacement backwards, the rear portion 22 of the sitting surface 2 remains substantially at the same height as that of Figure 1.

In turn, the mobile hinges 29 of the levers 21 displace along an arc β, also smaller than 90°, comprised between a vertical line V2 passing through the first fixed hinge 26 and a horizontal line H passing through the same fixed hinge 26. The front portion 18 of the sitting surface is then lowered considerably and sets itself in a depression 39 provided in the floor panel 19.

In this way, the backrest 3 sets itself with its rear plate 17 substantially horizontal, as indicated in Figure 3, so that the surface of the coating of the wall 17 can be used as additional loading surface, which preferably is a prosecution of the plane for the luggage compartment of the motor vehicle. With said movement, the gas spring 38 is moreover loaded, which thus damps the movement of the plate 11 towards the fixed brackets 24, thus preventing any impact thereof. The presence of the gas spring 38 is not binding for operation of the kinematic system, but is essential if it is desired to reduce the actuation loads in bringing the seat back up.

To bring the seat 1, with the backrest 3, back into the upright position, it is sufficient to rotate the backrest 3 about the fixed hinges 32 of the brackets 23, from the position of Figure 3 in the clockwise direction. The mobile hinges 34 of the brackets 23 then displace forwards the interconnection brackets 33 together with the frame 4 of the sitting surface 2. In turn, the levers 21 are turned in the counter-clockwise direction, so raising the front portion 18 of the sitting surface 2. The effort of the user for displacement of the backrest 3 towards the upright position and for raising the front portion 18 of the sitting surface 2 is reduced by the gas spring 38, which then returns the energy accumulated during the movement of knocking down of the backrest 3.

The dimensions of the levers 21 and of the brackets 23 and the positions of the corresponding hinges 26, 29 and 32, 34 are such that, when the seat 1 is brought into the position of Figure 3, the line joining the hinges 26 and 29 of the levers 21 is above a line D joining the corresponding fixed hinge 26 of the lever 21 with the corresponding mobile hinge 34 of the bracket 33. In this way, the dead point of the mechanism, represented by the alignment of the mobile hinge 29 with the line D, is not passed. In fact, in the case where there were to be said alignment, it would not be possible to rotate the levers 21, pushing the brackets 33 forwards, via the mobile hinges 34. Worse still, if said dead point were passed, the thrust forwards of the brackets 33 would tend to push the mobile hinges 29 of the levers 21 downwards, instead of upwards.

From what has been seen above, the advantages of the second-row seat according to the invention as compared to the seats of the known art are evident. First of all, the mechanism for connection between the sitting surface 2 and the backrest 3, comprising just two articulated elements 21 and 23, is particularly simplified, so that production of the seat is very simple and inexpensive. Furthermore, the manoeuvre of knocking the backrest 3 down and pulling it back up is very simple requiring a single movement of rotation. Finally, since the mobile hinge 34 of the brackets 23 is set underneath the centre of rotation of the backrest 3, no stress of raising of the backrest 3 before it is knocked down is necessary.

It is understood that various modifications and improvements can be made to the second-row seat described above, without departing from the scope of the claims. For example, the two frames 4 and 7 can present a different structure. Furthermore, the gas spring 38 can be replaced with other types of springs.

Finally, knocking the backrest 3 down and bringing it back up can be obtained by means of a purposely provided electric motor.

## Claims

1. A second-row seat for a motor vehicle, in which a backrest (3) is adapted to be knocked down onto a sitting surface (2) to form a loading surface, said sitting surface (2) having a front portion (18) and a rear portion and comprising a rigid frame (4) provided with two side bars (9) associated with two corresponding first articulated elements (21), each having a fixed hinge (26) carried by a base (19) and a first articulated mobile hinge (29) carried by said frame (4); said backrest (3) comprising another rigid frame (7) provided with two uprights (13) associated with two corresponding second articulated elements (23) fixed with respect to said backrest (3), each said second articulated element (23) having a corresponding second fixed hinge (32) carried by said base (19), a second mobile hinge (34) on each said second articulated element (23) hinging said rear portion as to displace said sitting surface (2) in concomitance with knocking-down of said backrest (3); said side bars (9) being connected by a shaped plate (11) adjacent to said front portion (18); **characterized in that** said shaped plate (11) is provided with longitudinallly extending openings (28) in a position corresponding to each first articulated element (21) and with upward projecting appendages (31) each carrying the corresponding first articulated mobile hinge (29), said appendages (31) being located at the rear end of the corresponding openings (28) of said shaped plate (11), each opening (28) being designed to house the corresponding first articulated element (21).

2. The second-row seat according to Claim 1, wherein said articulated elements (21, 23) are set in such a way as to displace said sitting surface (2) backwards and downwards when said backrest (3) is knocked down, **characterized in that** each said first fixed hinge (26) is carried by a front bracket (24) fixed on said base (19), each one of said first articulated elements being formed by a lever (21) pivoted on the corresponding first fixed hinge (26), so as to cause also said corresponding first fixed hinge (26) to be housed in the corresponding opening (28) when said sitting surface (2) is so displaced.

3. The second-row seat according to Claim 2, **characterized in that** said shaped plate (11) is designed as to be stopped in a position wherein each said first mobile hinge (29) is above a line (D) joining the corresponding first fixed hinge (26) and the corresponding second mobile hinge (34).

4. The second-row seat according to Claim 3, **characterized in that** each said opening (28) is provided with a front edge adapted to be arrested by the corresponding front bracket (24) when said sitting surface (2) is so displaced.

5. The second-row seat according to any one of the preceding Claims, **characterized in that** each said second articulated element is formed by a bracket (23) fixed with respect to a corresponding upright (13) of said backrest (3), said second fixed hinge (32) being set on a fixed bracket (25) for connection of said backrest (3) to said base (19).

6. The second-row seat according to Claim 5,**characterized in that** said second mobile hinge (34) is set on another bracket (33) for interconnection between said sitting surface (2) and said second articulated element (23).

7. The second-row seat according to Claim 5 or 6, **characterized in that** a damping gas spring (38) is arranged between said fixed bracket (25) and said shaped plate (11) for assistance of the movement of said sitting surface (2) and said backrest (3).

## Patentansprüche

1. Zweitreihensitz für ein Kraftfahrzeug, bei dem eine Rückenlehne (3) dazu ausgelegt ist, auf eine Sitzoberfläche (2) umgelegt zu werden, um eine Ladeoberfläche zu bilden, wobei die Sitzoberfläche (2) einen vorderen Abschnitt (18) und einen hinteren Abschnitt besitzt und einen starren Rahmen (4) aufweist, der mit zwei Seitenstäben (9) versehen ist, die zwei entsprechenden ersten angelenkten Elementen (21) zugeordnet sind, wovon jedes ein durch eine Basis (19) getragenes festes Scharnier (26) und ein erstes angelenktes bewegliches Scharnier (29), das durch den Rahmen (4) getragen wird, besitzt; wobei die Rückenlehne (3) einen weiteren starren Rahmen (7) umfasst, der mit zwei Ständern (13) versehen ist, die zwei entsprechenden zweiten angelenkten Elementen (23) zugeordnet sind, die in Bezug auf die Rückenlehne (3) fest sind, wobei jedes zweite angelenkte Element (23) ein entsprechendes zweites festes Scharnier (32), das durch die Basis (19) getragen wird, und ein zweites bewegliches Scharnier (34) an jedem zweiten angelenkten Element (23), das den hinteren Abschnitt gelenkig verbindet, um die Sitzoberfläche (2) bei einem Umlegen der Rückenlehne (3) zu verlagern, aufweist; wobei die Seitenstäbe (9) durch eine Formplatte (11) benachbart zu dem vorderen Abschnitt (18) verbunden ist; **dadurch gekennzeichnet, dass** die Formplatte (11) mit longitudinal verlaufenden Öffnungen (28) an jeweiligen Positionen, die jedem ersten angelenkten Element (21) entsprechen, und mit aufrecht vorstehenden Ansätzen (31) versehen ist, wovon jeder das entsprechende erste angelenkte bewegliche Scharnier (29) trägt, wobei sich die Ansätze (31) am hinteren Ende der entsprechenden Öffnungen (28) der Formplatte (11) befinden, wobei jede Öffnung (28) entworfen ist, um das entsprechende erste angelenkte Element (21) aufzunehmen.

2. Zweitreihensitz nach Anspruch 1, wobei die angelenkten Elemente (21, 23) in der Weise angebracht sind, dass sie die Sitzoberfläche (2) nach hinten und nach unten verlagern, wenn die Rückenlehne (3) umgelegt wird, **dadurch gekennzeichnet, dass** jedes erste feste Scharnier (26) durch einen vorderen Arm (24) getragen wird, der an der Basis (19) befestigt ist, wobei jedes erste angelenkte Element durch einen Hebel (21) gebildet ist, der an dem entsprechenden ersten festen Scharnier (26) drehbar ist, um auch zu veranlassen, dass das entsprechende erste feste Scharnier (26) in der entsprechenden Öffnung (28) aufgenommen ist, wenn die Sitzoberfläche (2) auf diese Weise verlagert worden ist.

3. Zweitreihensitz nach Anspruch 2, **dadurch gekennzeichnet, dass** die Formplatte (11) entworfen ist, um an einer Position angehalten zu werden, in der sich jedes erste bewegliche Scharnier (29) über einer Linie (D) befindet, die das entsprechende erste feste Scharnier (26) und das entsprechende zweite bewegliche Scharnier (34) verbindet.

4. Zweitreihensitz nach Anspruch 3, **dadurch gekennzeichnet, dass** jede Öffnung (28) mit einer Vorderkante versehen ist, die dazu ausgelegt ist, durch den entsprechenden vorderen Arm (24) arretiert zu werden, wenn die Sitzoberfläche (2) auf diese Weise verlagert wird.

5. Zweitreihensitz nach einem der vorhergehenden Ansprüche, **dadurch gekennzeichnet, dass** jedes zweite angelenkte Element durch einen Arm (23) gebildet ist, der in Bezug auf einen entsprechenden Ständer (13) der Rückenlehne (3) fest ist, wobei das zweite feste Scharnier (32) an einem festen Arm (25) für eine Verbindung der Rückenlehne (3) mit der Basis (19) angebracht ist.

6. Zweitreihensitz nach Anspruch 5, **dadurch gekennzeichnet, dass** das zweite bewegliche Scharnier (34) an einem weiteren Arm (33) angebracht ist, um eine Zwischenverbindung zwischen der Sitzoberfläche (2) und dem zweiten angelenkten Element (23) zu schaffen.

7. Zweitreihensitz nach Anspruch 5 oder 6, **dadurch gekennzeichnet, dass** eine Dämpfungsgasfeder (38) zwischen dem festen Arm (25) und der Formplatte (11) angeordnet ist, um die Bewegung der Sitzoberfläche (2) und der Rückenlehne (3) zu unterstützen.

## Revendications

1. Siège de deuxième rangée pour un véhicule à moteur, dans lequel un dossier (3) est conçu pour être rabattu sur une surface d'assise (2) afin de former une surface de chargement, ladite surface d'assise (2) ayant une partie avant (18) et une partie arrière et comprenant une ossature rigide (4) dotée de deux barres latérales (9) associées à deux premiers éléments articulés correspondants (21), chacun ayant une charnière fixe (26) supportée par une base (19) et une première charnière mobile articulée (29) supportée par ladite ossature (4), ledit dossier (3) comprenant une autre ossature rigide (7) dotée de deux montants (13) associés à deux deuxièmes éléments articulés correspondants (23) fixés par rapport audit dossier (3), chaque dit deuxième élément articulé (23) ayant une deuxième charnière fixe correspondante (32) supportée par ladite base (19), une deuxième charnière mobile (34) sur chaque dit deuxième élément articulé (23) articulant ladite partie arrière de façon à déplacer ladite surface d'assise (2) simultanément au rabattement dudit dossier (3), lesdites barres latérales (9) étant reliées par une plaque façonnée (11) adjacente à ladite partie avant (18) ; **caractérisé en ce que** ladite plaque façonnée (11) est dotée d'ouvertures s'étendant longitudinalement (28) dans une position correspondant à chaque premier élément articulé (21) et avec des accessoires dépassant vers le haut (31), chacun supportant la première charnière mobile articulée correspondante (29), lesdits accessoires (31) étant situés à l'extrémité arrière des ouvertures correspondantes (28) de ladite plaque façonnée (11), chaque ouverture (28) étant conçue pour recevoir le premier élément articulé correspondant (21).

2. Siège de deuxième rangée selon la revendication 1, dans lequel lesdits éléments articulés (21, 23) sont disposés de telle manière à déplacer ladite surface d'assise (2) vers l'arrière et vers le bas lorsque ledit dossier (3) est rabattu, **caractérisé en ce que** chaque dite première charnière fixe (26) est supportée par un élément de support avant (24) fixé sur ladite base (19), chacun desdits premiers éléments articulés étant formé par un levier (21) qui pivote sur la première charnière fixe correspondante (26) de façon à amener également ladite première charnière fixe correspondante (26) à être reçue dans l'ouverture correspondante (28) lorsque ladite surface d'assise (2) est déplacée de cette manière.

3. Siège de deuxième rangée selon la revendication 2, **caractérisé en ce que** ladite plaque façonnée (11) est conçue pour être arrêtée dans une position dans laquelle chaque dite première charnière mobile (29) se situe au-dessus d'une droite (D) reliant la première charnière fixe correspondante (26) et la deuxième charnière mobile correspondante (34).

4. Siège de deuxième rangée selon la revendication 3, **caractérisé en ce que** chaque dite ouverture (28) est dotée d'un bord avant conçu pour être arrêté par l'élément de support avant correspondant (24) lorsque ladite surface d'assise (2) est déplacée de cette manière.

5. Siège de deuxième rangée selon l'une quelconque des revendications précédentes, **caractérisé en ce que** chaque dit deuxième élément articulé est formé par un élément de support (23) fixé par rapport à un montant correspondant (13) dudit dossier (3), ladite deuxième charnière fixe (32) étant disposée sur un élément de support fixe (25) destiné à relier ledit dossier (3) à ladite base (19).

6. Siège de deuxième rangée selon la revendication 5, **caractérisé en ce que** ladite deuxième charnière mobile (34) est disposée sur un autre élément de support (33) pour un raccordement mutuel entre ladite surface d'assise (2) et ledit deuxième élément articulé (23).

7. Siège de deuxième rangée selon la revendication 5 ou 6, **caractérisé en ce qu'**un ressort à gaz amortisseur (38) est agencé entre ledit élément de support fixe (25) et ladite plaque façonnée (11) pour une assistance du déplacement de ladite surface d'appui (2) et dudit dossier (3).
